# FASCICULE DE BREVET EUROPEEN

(11) **EP 1 492 950 B1**
(45) Date de publication et mention de la délivrance du brevet: **09.09.2009**
(21) Numéro de dépôt: 03740587.5
(22) Date de dépôt: 10.04.2003
(51) Int. Cl.: F02M 25/07

(54) **VANNE A VOIES MULTIPLES**
MEHRWEGVENTIL
BYPASS VALVE FOR AN INTERNAL COMBUSTION ENGINE EXHAUST GAS COOLING DEVICE

(30) Priorité: 10.04.2002 FR 0204457
(43) Date de publication de la demande: 05.01.2005
(73) Titulaire: Valeo Systèmes de Contrôle Moteur, 95520 Osny (FR)
(72) Inventeur: RESSEGUIER, Yves, F-95350 Saint-Brice-sous-Foret (FR); JUDELLE, Bernard, F-63500 Issoire (FR)
(86) Numéro de dépôt international: PCT/FR2003/001136
(87) Numéro de publication internationale: WO 2003/085252

(56) Documents cités:
- EP-A- 1 030 050
- DE-A- 4 018 696
- DE-A- 10 025 877
- DE-B- 1 147 092
- DE-C- 941 058
- GB-A- 1 376 202
- US-A- 1 545 121
- US-A- 3 270 775
- US-B1- 6 286 306

## Description

La présente invention concerne des perfectionnements apportés dans le domaine du refroidissement des gaz d'échappement des moteurs à combustion interne, notamment en vue d'une réinjection d'au moins une partie de ces gaz d'échappement, contenant du carburant incomplètement brûlé, dans le moteur.

### ARRIERE-PLAN DE L'INVENTION

Une valve de by-pass comprend généralement un corps définissant une chambre munie d'une entrée et de deux sorties adjacentes et abritant un organe d'obturation pivotant sous l'action de moyens de commande pour obturer sélectivement l'une ou l'autre des sorties en prenant appui sur des sièges ménagés dans le corps. La valve de by-pass comporte des moyens de sa fixation à un dispositif. Ce dispositif peut être un dispositif de refroidissement des gaz d'échappement d'un moteur à combustion interne. La vanne de by-pass étant fixée sur le dispositif de telle manière que les sorties soient raccordées à deux voies de circulation des gaz définies dans le dispositif de refroidissement, à savoir une voie directe non refroidie et une voie de refroidissement des gaz. Une telle structure de la valve de by-pass est relativement encombrante et complexe.

### BUT DE L'INVENTION

L'invention a pour but de proposer une valve de by-pass de faible encombrement, robuste, fiable et d'un coût relativement faible.

### EXPOSE DE L'INVENTION

A cet effet, on prévoit, selon l'invention, une valve de by-pass comprenant un corps définissant une chambre munie d'une entrée et de deux sorties adjacentes l'une à l'autre, un organe d'obturation monté sur un axe de pivotement s'étendant entre les deux sorties adjacentes pour pivoter entre deux positions extrêmes sous l'action de moyens de commande, et des moyens de positionnement de la valve de by-pass sur un dispositif de refroidissement des gaz d'échappement d'un moteur à combustion interne de telle manière que les sorties de la valve de by-pass soient raccordées pour l'une à une voie refroidie de circulation des gaz et pour l'autre à une voie non refroidie de circulation des gaz. L'organe d'obturation possède au moins une palette s'étendant depuis l'axe de pivotement et les moyens de positionnement sont agencés de telle manière que, dans au moins une des positions extrêmes de l'organe d'obturation, la palette soit en appui contre une partie du dispositif de refroidissement pour occulter une des voies de circulation du dispositif de refroidissement.

Ainsi, pour au moins une des positions extrêmes de l'organe d'obturation, il n'est pas nécessaire de prévoir, dans le corps de la valve de by-pass, un siège pour la palette de l'organe- d'obturation, ce qui simplifie la fabrication de .la valve de by-pass et limite l'encombrement de celle-ci.

Dans un mode de réalisation préféré en raison de sa simplicité de structure et de fabrication, les deux sorties sont agencées sous forme d'une ouverture unique en travers de laquelle s'étend l'axe de pivotement de l'organe d'obturation et les sorties sont formées par les deux portions de l'ouverture unique qui s'étendent de part et d'autre dudit axe de pivotement.

De préférence, l'organe d'obturation possède deux palettes disposées en V de part et d'autre de l'axe de pivotement.

Le recours à un organe d'obturation formant un volet en V permet de limiter la rotation de l'organe d'obturation entre ses deux positions extrêmes alors que la rotation exigée par un volet monopalette, d'une part, nécessite un laps de temps important et, d'autre part, est incompatible avec l'amplitude de mouvement limitée que peuvent communiquer des moyens pneumatiques à dépression couramment utilisés dans ce domaine.

En particulier, lorsque les deux voies de circulation des gaz possèdent des sections différentes, on peut prévoir que l'axe de pivotement de l'organe d'obturation soit disposé en travers de l'ouverture unique de façon non médiane, et que les deux palettes constitutives de l'organe d'obturation possèdent des formes et des surfaces différentes en rapport avec les formes et surfaces des deux portions de l'ouverture situées de part et d'autre de l'axe de pivotement.

Pour améliorer le fonctionnement de la valve et réduire les turbulences des gaz en déplacement, on peut très avantageusement faire en sorte que les deux palettes de l'organe d'obturation soient disposées dans une position angulaire mutuelle telle que, lorsqu'une palette est en position d'obturation d'une des voies de circulation, l'autre palette située à l'intérieur de la chambre est positionnée, par rapport à l'entrée des gaz, de manière à former approximativement un déflecteur rabattant les gaz sensiblement en direction de la voie de circulation non occultée.

Pour cette raison et celles exposées plus haut, de façon préférée les deux palettes forment entre elles un angle d'environ 45° à 80°, de préférence d'environ 70°.

Il en résulte que l'amplitude angulaire de pivotement de l'organe d'obturation se situe respectivement entre 135° et 100°, de préférence de l'ordre de 110°, ce qui reste parfaitement compatible avec les caractéristiques des moyens de commande pneumatiques à dépression habituellement employés dans ce domaine.

Avantageusement, les deux palettes sont constituées sous forme d'une pièce métallique monobloc.

Les deux palettes sont ainsi formées par une pièce métallique rigide qui est relativement peu déformable et qui présente une bonne résistance à l'usure. Un fonctionnement fiable est ainsi assuré.

L'invention sera mieux comprise à la lecture de la description qui suit de modes de réalisation préférés donnés uniquement à titre d'exemples non limitatifs de l'invention.

### BREVE DESCRIPTION DES DESSINS

Il sera fait référence aux dessins annexés, parmi lesquels :
- la figure 1 est une vue schématique de côté, avec arrachement partiel, d'un dispositif refroidisseur de gaz d'échappement auquel est fonctionnellement associée une valve de by-pass agencée conformément à l'invention ;
- les figures 2A et 2B sont des vues en perspective de la valve de by-pass conforme à l'invention montrée respectivement dans deux positions fonctionnelles différentes ;
- les figures 3A et 3B sont des vues de face de la valve de by-pass des figures 2A, 2B montrée respectivement dans les deux mêmes positions fonctionnelles différentes ; et
- les figures 4A et 4B sont des vues schématiques de dessus, en coupe selon les lignes IV-IV des figures 3A, 3B, de la valve by-pass des figures 2A, 2B et 3A, 3B montrée respectivement dans les deux mêmes positions fonctionnelles.

### DESCRIPTION DETAILLEE DE MODES DE REALISATION

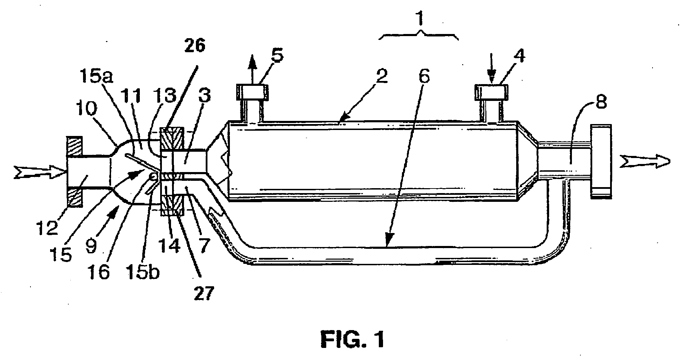

A la figure 1 est illustré schématiquement un dispositif refroidisseur 1 propre à refroidir les gaz d'échappement d'un moteur à combustion interne, par exemple aux fins de recirculation de ces gaz pour réduire le taux des imbrûlés rejetés finalement dans l'atmosphère (système EGR).

Le dispositif 1 comprend deux voies possibles de circulation des gaz d'échappement :
- une première voie est constituée par un corps de refroidissement 2, muni d'une entrée 3 (ou première entrée du dispositif 1), dans lequel les gaz d'échappement circulent au contact d'un fluide de refroidissement introduit en 4 et évacué en 5 ; on connaît divers modes de réalisation d'un tel corps de refroidissement. ;
- une seconde voie est constituée par un simple conduit en dérivation 6 qui comporte une entrée distincte 7 (ou seconde entrée du dispositif 1) et qui, à l'autre extrémité, se raccorde à la sortie 8 du corps 2 ; le conduit 6 est simplement parcouru par les gaz d'échappement, sans effet de refroidissement autre que celui dû aux pertes ambiantes.

Compte tenu des pertes de charge plus importantes dans le corps de refroidissement 2, l'entrée 3 de celui-ci possède, en général, une section plus grande que celle de l'entrée 7 du conduit en dérivation 6.

Pour diriger les gaz vers l'une et/ou l'autre des deux voies précitées, on associe au dispositif refroidisseur 1 une valve de by-pass (ou de direction/répartition) 9, qui, comme illustré à la figure 1, peut être disposée en tête du dispositif refroidisseur 1.

Une telle valve de by-pass comporte un corps 10 définissant une chambre interne 11 munie d'une entrée 12 pour les gaz en provenance du moteur et deux sorties 13, 14.

La valve de by-pass 9 comprend des moyens de sa fixation et de son positionnement sur le dispositif de refroidissement 1 agencées de telle manière que les deux sorties 13, 14 soient raccordées respectivement aux deux entrées 3, 7 du dispositif refroidisseur 1. Les moyens de fixation et de positionnement sont ici formés d'une bride 26 destinée à être fixée, par exemple par boulonnage, sur une bride correspondante 27 du dispositif de refroidissement 1 au niveau de laquelle débouchent les entrées 3 et 7.

Un organe d'obturation est associé aux sorties 13, 14 afin de les obturer sélectivement, ou éventuellement de façon proportionnelle.

L'invention s'attache à perfectionner plus spécifiquement les valves de by-pass qui sont équipées, en tant qu'organe d'obturation, d'un volet pivotant 15 tournant autour d'un axe 16.

Comme illustré à la figure 1, les deux sorties 13, 14 de la valve de by-pass 9 sont sensiblement coplanaires et adjacentes, ce qui implique que le dispositif refroidisseur 1 soit muni, de façon correspondante, de deux entrées 3, 7 sensiblement coplanaires et adjacentes.

Le volet 15 est supporté sur le corps 10 de la valve de by-pass 9 par un axe de pivotement 16 qui s'étend entre les deux sorties 13, 14 adjacentes.

Plus précisément, les deux sorties 13, 14 sont agencées sous forme d'une ouverture unique 17 en travers de laquelle s'étend l'axe de pivotement 16 du volet 15 : dans ces conditions les deux sorties 13, 14 sont, simplement, formées par les deux portions de l'ouverture unique 17 qui s'étendent de part et d'autre de l'axe de pivotement 16.

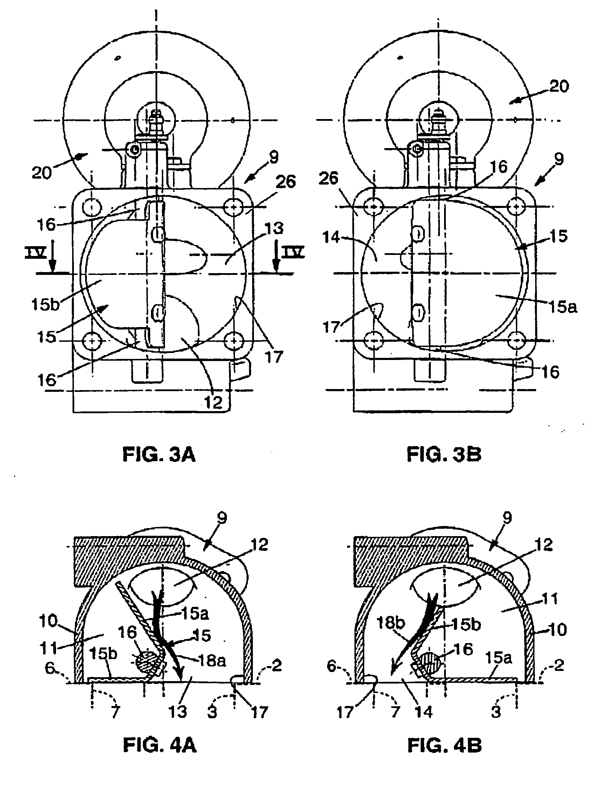

Le volet 15 comprend (comme on le voit mieux aux figures 4A, 4B) deux palettes 15a, 15b à contours sensiblement plans disposées en V de part et d'autre de l'axe 16.

Comme on l'a expliqué plus haut, les deux entrées 3, 7 du dispositif refroidisseur 1 peuvent de façon classique posséder des sections différentes comme représenté sur les figures. De façon correspondante, les deux sorties 13, 14 présentent alors elles aussi des sections différentes; et l'axe de pivotement 16 est alors décalé et est disposé en travers de l'ouverture unique 17 de façon non médiane. Dans ce cas, les deux palettes constitutives du volet 15 possèdent des formes et des surfaces différentes en rapport avec les formes et surfaces respectives des deux portions de l'ouverture unique 17 situées de part et d'autre de l'axe 16. Ainsi, dans le cas illustré où l'ouverture unique 17 est circulaire, les deux palettes 15a, 15b sont en forme approximative de secteurs semi-circulaires, la palette 15b (associée à la sortie 14 de petite section) ayant un rayon plus faible que celui de la palette 15a associée à la sortie 13 de grande section.

Dans l'exemple concret de réalisation illustré aux figures' 2A, 2B, 3A, 3B et 4A, 4B, le corps 10 est hémisphérique avec un diamètre intérieur en correspondance avec la longueur de la plus grande des palettes (15a dans l'exemple illustré) et l'entrée 12 est située à la partie inférieure du corps 10.

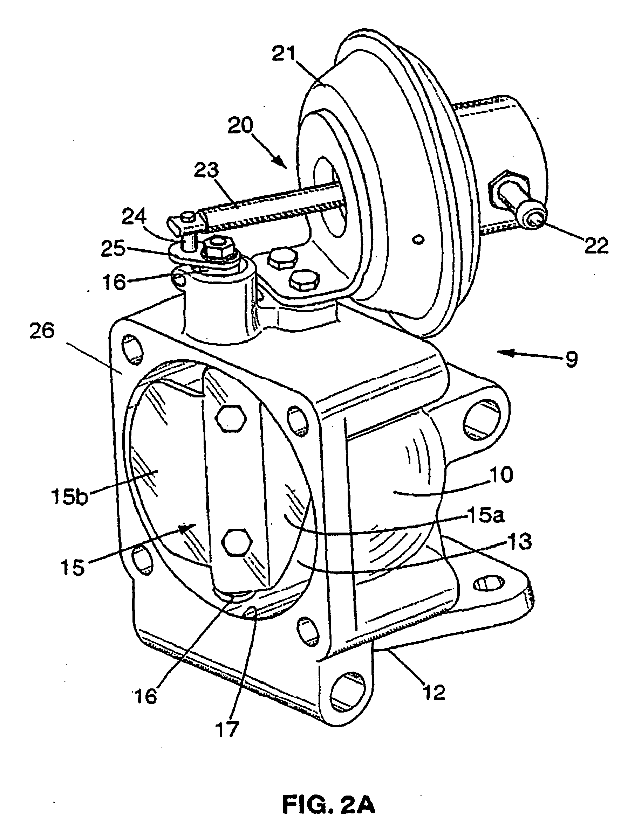

Le volet 15 est mobile, sous l'action de moyens de commande qui seront décrits plus loin, entre deux positions extrêmes, dans lesquelles les deux palettes 15a, 15b occultent, sélectivement, respectivement les deux sorties 13, 14 : la palette 15a occulte la sortie 13 lorsque le volet est dans une de ses positions extrêmes et la palette 15b occulte la sortie 14 lorsque le volet est dans son autre position extrême comme cela apparaît clairement respectivement sur les figures 2A, 2B ; 3A, 3B ; 4A, 4B .

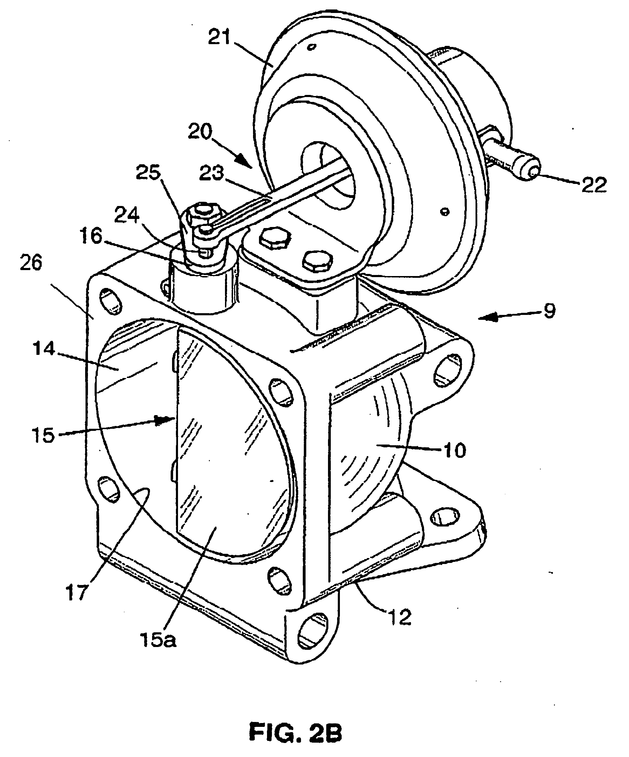

Plus précisément, les moyens de positionnement sont agencés de telle manière que, lorsque le volet 15 est dans chacune de ses positions extrêmes, une des palettes soit en appui contre un bord périphérique de l'entrée correspondante du dispositif refroidisseur pour occulter cette entrée (voir les figures 4A et 4B). L'étanchéité est obtenue par cet appui frontal de la palette contre une partie du dispositif de refroidissement qui est disposé en aval de la valve de by-pass par référence au sens de circulation des gaz. En outre, dans le mode de réalisation visible aux figures 2A, 2B et 4A, 4B, chaque palette 15a, 15b s'emboîte, en position de fermeture, dans la portion correspondante de l'ouverture 17, de telle sorte que le contour de la face externe de la palette affleure la face correspondante du corps 10 (en l'occurrence, chaque palette 15a, 15b est plane).

Pour que le volet 15 soit sensiblement indéformable et incassable en présence des gaz chauds et agressifs, il est avantageux qu'il se présente sous forme d'une pièce métallique monobloc, les deux palettes pouvant avantageusement être planes de manière que la pièce unique puisse par exemple être obtenue par découpe et pliage d'une plaque métallique en acier ou en aluminium.

Comme visible notamment aux figures 4A, 4B, les deux palettes forment entre elles un angle compris entre environ 45° et 80°, de préférence de l'ordre de 70°. De la sorte le pivotement du volet 15 d'une position extrême à l'autre s'effectue sur une plage angulaire comprise respectivement entre 135° et 100°, de préférence de l'ordre de 110°. Ainsi, le pivotement complet du volet s'effectue plus rapidement que dans le cas d'un volet monopalette pivotant de 180°. En outre, la palette non fonctionnelle (c'est-à-dire n'assurant pas sa fonction d'occultation d'une voie de circulation) qui s'étend à l'intérieur de la chambre 11 (palette 15a à la figure 4A ; palette 15b à la figure 4B) est disposée, par rapport à l'entrée 12, de manière à jouer le rôle de déflecteur pour les gaz arrivant (flèche 18a à la figure 4A ; flèche 18b à la figure 4B) qui sont alors déviés en direction de la sortie opérationnelle (sortie 13 ouverte à la figure 4A ; sortie 14 ouverte à la figure 4B). On réduit ainsi les turbulences, et donc les pertes de charge, des gaz à la traversée de la valve de by-pass 9.

Au surplus, on notera que le pivotement d'amplitude restreinte du volet 15 autorise sa commande à l'aide de classiques moyens pneumatiques à dépression tels que ceux illustrés en 20 aux figures 2A, 2B. Ces moyens peuvent comporter une capsule étanche 21 renfermant une membrane déformable sous l'action d'une dépression appliquée (orifice 22) sur une de ses faces. Par son autre face, la membrane est solidaire d'un équipage mobile l'accouplant à l'axe 16 du volet ; par exemple la membrane est solidaire de l'extrémité d'une bielle 23 dont l'autre extrémité est articulée à rotation en 24 à une biellette 25, elle-même solidaire en rotation de l'axe de pivotement 16.

On notera que l'agencement de valve de by-pass conforme à l'invention n'est pas exclusif d'un fonctionnement commutatif, et qu'il est possible d'envisager une commande proportionnelle permettant d'amener le volet dans n'importe quelle position angulaire en correspondance avec une répartition souhaitée des flux de gaz simultanés dans les deux voies du dispositif refroidisseur 1 afin d'obtenir, en sortie de celui-ci, un flux de gaz ayant toute température abaissée souhaitée. A cette fin, il est possible de prévoir que les moyens de commande du volet 15 comprennent des moyens de contrôle de la position du volet qui sont fonctionnellement associés à une pièce de l'équipage mobile (notamment le volet lui-même et/ou l'axe du volet et/ou la membrane déformable et/ou la bielle ou la biellette de transition), lesdits moyens de contrôle pouvant faire appel notamment à un capteur à effet Hall, une cellule potentiométrique...

Bien entendu, l'invention n'est pas limitée aux modes de réalisation décrits et on peut y apporter des variantes de réalisation sans sortir du cadre de l'invention tel que défini par les revendications.

En particulier, l'organe d'obturation peut ne comporter qu'une seule palette s'étendant à partir de l'axe de pivotement.

En variante, les palettes peuvent être en appui contre une portion seulement du bord périphérique de l'entrée correspondante du dispositif refroidisseur pour occulter cette entrée.

En outre, le corps peut comprendre un siège d'appui pour une des palettes lorsque l'organe d'obturation est dans une de ses positions extrêmes.

## Revendications

1. Valve de by-pass (9) comprenant un corps (10) définissant une chambre (11) munie d'une entrée (12) et de deux sorties (13, 14) adjacentes l'une à l'autre, un organe d'obturation (15) monté sur un axe de pivotement (16) s'étendant entre les deux sorties adjacentes pour pivoter entre deux positions extrêmes sous l'action de moyens de commande (20), et des moyens de positionnement (26) de la valve de by-pass sur un dispositif (1) de refroidissement des gaz d'échappement d'un moteur à combustion interne de telle manière que les sorties de la valve de by-pass soient raccordées pour l'une à une voie refroidie (2) de circulation des gaz et pour l'autre à une voie non refroidie (6) de circulation des gaz,
**caractérisée en ce que** l'organe d'obturation possède au moins une palette (15a, 15b) s'étendant depuis l'axe de pivotement et les moyens de positionnement sont agencés de telle manière que, dans au moins une des positions extrêmes de l'organe d'obturation, la palette soit en appui contre une partie du dispositif de refroidissement, dans la position montée, pour occulter la voie de circulation correspondante du dispositif de refroidissement.

2. Valve de by-pass selon la revendication 1, **caractérisée en ce que** les deux sorties sont agencées sous forme d'une ouverture unique (17) en travers de laquelle s'étend l'axe (16) de pivotement de l'organe d'obturation (15) et **en ce que** les sorties (13, 14) sont formées par les deux portions de l'ouverture unique (17) qui s'étendent de part et d'autre de l'axe de pivotement (16).

3. Valve de by-pass selon la revendication 1 ou la revendication 2, **caractérisée en ce que** l'organe d'obturation (15) possède deux palettes (15a, 15b) disposées en V de part et d'autre de l'axe de pivotement (16).

4. Valve de by-pass selon la revendication 3, **caractérisée en ce que**, les deux voies (2, 6) de circulation des gaz possédant des sections différentes, l'axe (16) de pivotement de l'organe d'obturation (15) est disposé en travers de l'ouverture unique (17) de façon non médiane, et **en ce que** les deux palettes (15a, 15b) de l'organe d'obturation possèdent des formes et des surfaces différentes en rapport avec des formes et des surfaces des deux portions de l'ouverture situées de part et d'autre de l'axe de pivotement.

5. Valve de by-pass selon la revendication 3 ou la revendication 4, **caractérisée en ce que** les deux palettes (15a, 15b) de l'organe d'obturation (15) sont disposées dans une position angulaire mutuelle telle que, lorsqu'une palette est en position d'occultation de la voie de circulation correspondante, l'autre palette située à l'intérieur de la chambre (11) est positionnée, par rapport à l'entrée (12) des gaz, de manière à former un déflecteur rabattant les gaz sensiblement en direction de la voie de circulation non occultée.

6. Valve de by-pass selon la revendication 5, **caractérisée en ce que** les deux palettes (15a, 15b) forment entre elles un angle d'environ 45° à 80°.

7. Valve de by-pass selon la revendication 6, **caractérisée en ce que** les deux palettes (15a, 15b) forment entre elles un angle d'environ 70°.

8. Valve de by-pass selon l'une quelconque des revendications 3 à 7, **caractérisée en ce que** les deux palettes (15a, 15b) sont constituées sous forme d'une pièce métallique monobloc.

9. Valve de by-pass selon l'une quelconque des revendications 1 à 8, **caractérisée en ce que** la palette (15a, 15b) est sensiblement plane.

## Claims

1. Bypass valve (9) comprising a body (10) defining a chamber (11) equipped with one inlet (12) and with two outlets (13, 14) adjacent to one another, a shut-off member (15) mounted on a pivot axle (16) extending between the two adjacent outlets in order to pivot between two extreme positions under the action of operating means (20), and means (26) of positioning the bypass valve on an internal combustion engine exhaust gas cooling device (1) in such a way that the outlets of the bypass valve are connected one of them to a cooled gas circulation passage (2) and the other of them to an uncooled gas circulation passage (6), **characterized in that** the shut-off member has at least one vane (15a, 15b) extending from the pivot axle and the positioning means are arranged in such a way that, when the shut-off member is in at least one of the extreme positions, the vane presses against a part of the cooling device, in the mounted position, in order to close off the corresponding circulation passage of the cooling device.

2. Bypass valve according to Claim 1, **characterized in that** the two outlets are arranged in the form of a single opening (17) through which the pivot axle (16) of the shut-off member (15) extends, and **in that** the outlets (13, 14) are formed by the two portions of the single opening (17) which extend on either side of the pivot axle (16).

3. Bypass valve according to Claim 1 or Claim 2, **characterized in that** the shut-off member (15) has two vanes (15a, 15b) arranged in a V on either side of the pivot axle (16).

4. Bypass valve according to Claim 3, **characterized in that**, with the two gas circulation passages (2, 6) having different cross sections, the pivot axle (16) of the shut-off member (15) is arranged across the single opening (17) non-centrally, and **in that** the two vanes (15a, 15b) of the shut-off member have different shapes and surface areas in proportion with the shapes and surface areas of the two portions of the opening situated on either side of the pivot axle.

5. Bypass valve according to Claim 3 or Claim 4, **characterized in that** the two vanes (15a, 15b) of the shut-off member (15) are arranged in a mutual angular position that is such that, when one vane is in the position of closing off the corresponding circulation passage, the other vane situated inside the chamber (11) is positioned, relative to the gas inlet (12), in such a way as to form a deflector folding the gases back substantially towards the circulation passage that has not been closed off.

6. Bypass valve according to Claim 5, **characterized in that** the two vanes (15a, 15b) make an angle of about 45° to 80° between them.

7. Bypass valve according to Claim 6, **characterized in that** the two vanes (15a, 15b) make an angle of approximately 70° between them.

8. Bypass valve according to any one of Claims 3 to 7, **characterized in that** the two vanes (15a, 15b) are made in the form of a one-piece metal component.

9. Bypass valve according to any one of Claims 1 to 8, **characterized in that** the vane (15a, 15b) is substantially planar.

## Patentansprüche

1. Bypass-Ventil (9), das einen Körper (10), der eine mit einem Eingang (12) und mit zwei einander benachbarten Ausgängen (13, 14) versehene Kammer (11) definiert, ein Verschlussorgan (15), das auf eine Schwenkachse (16) montiert ist, die sich zwischen den zwei benachbarten Ausgängen erstreckt, um, unter der Wirkung von Steuereinrichtungen (20) zwischen zwei Endstellungen zu schwenken, und Einrichtungen (26) zur derartigen Positionierung des Bypass-Ventils auf einer Kühlvorrichtung (1) der Abgase einer Brennkraftmaschine enthält, dass der eine Ausgang des Bypass-Ventils an einen gekühlten Gasdurchflusskanal (2) und der andere an einen nicht gekühlten Gasdurchflusskanal (6) angeschlossen ist,
**dadurch gekennzeichnet, dass** das Verschlussorgan mindestens einen Flügel (15a, 15b) besitzt, der sich von der Schwenkachse aus erstreckt, und die Positioniereinrichtungen derart angeordnet sind, dass in mindestens einer der Endstellungen des Verschlussorgans der Flügel in der eingebauten Stellung gegen einen Teil der Kühlvorrichtung in Auflage ist, um den entsprechenden Durchflusskanal der Kühlvorrichtung zu verdecken.

2. Bypass-Ventil nach Anspruch 1, **dadurch gekennzeichnet, dass** die zwei Ausgänge in Form einer einzigen Öffnung (17) angeordnet sind, durch die hindurch sich die Schwenkachse (16) des Verschlussorgans (15) erstreckt, und dass die Ausgänge (13, 14) von den zwei Abschnitten der einzigen Öffnung (17) geformt werden, die sich zu beiden Seiten der Schwenkachse (16) erstrecken.

3. Bypass-Ventil nach Anspruch 1 oder Anspruch 2, **dadurch gekennzeichnet, dass** das Verschlussorgan (15) zwei Flügel (15a, 15b) besitzt, die V-förmig zu beiden Seiten der Schwenkachse (16) angeordnet sind.

4. Bypass-Ventil nach Anspruch 3, **dadurch gekennzeichnet, dass**, da die zwei Gasdurchflusskanäle (2, 6) unterschiedliche Querschnitte aufweisen, die Schwenkachse (16) des Verschlussorgans (15) durch die einzige Öffnung (17) hindurch nicht in der Mitte angeordnet ist, und dass die zwei Flügel (15a, 15b) des Verschlussorgans unterschiedliche Formen und Flächen entsprechend den Formen und Flächen der zwei Abschnitte der Öffnung besitzen, die sich zu beiden Seiten der Schwenkachse befinden.

5. Bypass-Ventil nach Anspruch 3 oder Anspruch 4, **dadurch gekennzeichnet, dass** die zwei Flügel (15a, 15b) des Verschlussorgans (15) in einer solchen gegenseitigen Winkelstellung angeordnet sind, dass, wenn ein Flügel in der Verdeckungsstellung des entsprechenden Gasdurchflusskanals ist, der innerhalb der Kammer (11) befindliche andere Flügel bezüglich des Gaseingangs (12) so positioniert ist, dass er ein Ablenkblech bildet, das die Gase im Wesentlichen in Richtung des nicht verdeckten Durchflusskanals umlenkt.

6. Bypass-Ventil nach Anspruch 5, **dadurch gekennzeichnet, dass** die zwei Flügel (15a, 15b) zwischen sich einen Winkel von etwa 45° bis 80° bilden.

7. Bypass-Ventil nach Anspruch 6, **dadurch gekennzeichnet, dass** die zwei Flügel (15a, 15b) zwischen sich einen Winkel von etwa 70° bilden.

8. Bypass-Ventil nach einem der Ansprüche 3 bis 7, **dadurch gekennzeichnet, dass** die zwei Flügel (15a, 15b) in Form eines einstückigen Metallbauteils ausgebildet sind.

9. Bypass-Ventil nach einem der Ansprüche 1 bis 8, **dadurch gekennzeichnet, dass** der Flügel (15a, 15b) im Wesentlichen eben ist.
